(19) Europäisches Patentamt / European Patent Office / Office européen des brevets

(11) **EP 2 325 655 B1**

(12) **FASCICULE DE BREVET EUROPEEN**

(45) Date de publication et mention de la délivrance du brevet:
**15.10.2014 Bulletin 2014/42**

(21) Numéro de dépôt: **10191174.1**

(22) Date de dépôt: **15.11.2010**

(51) Int Cl.:
*G01P 5/26* (2006.01)   *G01F 1/66* (2006.01)
*G01S 17/58* (2006.01)   *G01S 17/95* (2006.01)
*G01S 17/88* (2006.01)   *G06F 17/10* (2006.01)
*G06K 9/00* (2006.01)   *G01H 9/00* (2006.01)

(54) **Détection de vélocité ou des vibrations en utilisant un dispositif de type LIDAR hétérodyne**

Geschwindigkeits- oder Vibrationserfassung mittels Heterodyn-LIDAR

Detection of speed or vibrations using a heterodyne LIDAR lidar device

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.11.2009 FR 0958152**

(43) Date de publication de la demande:
**25.05.2011 Bulletin 2011/21**

(73) Titulaire: **ONERA (Office National d'Etudes et de
Recherches
Aérospatiales)
92320 Châtillon (FR)**

(72) Inventeurs:
 • **Valla, Matthieu
  91300, MASSY (FR)**
 • **Besson, Claudine
  91440, BURES SUR YVETTE (FR)**
 • **Augere, Béatrice
  91120, Palaiseau (FR)**

(74) Mandataire: **Cabinet Plasseraud
52, rue de la Victoire
75440 Paris Cedex 09 (FR)**

(56) Documents cités:
**WO-A1-2005/114253**

**Description**

La présente invention concerne la mesure de caractéristiques vélocimétriques ou vibrométriques en utilisant un dispositif de type LIDAR à détection hétérodyne, aussi appelé LIDAR cohérent. Elle concerne un procédé ainsi qu'un dispositif pour effectuer une telle mesure.

Les dispositifs de type LIDAR, pour «LIght Detection And Ranging» en anglais, sont très utilisés pour de nombreuses applications de détection et de mesure. Parmi ces applications, on peut citer la mesure de vitesses anémométriques, l'étude d'écoulements fluides, l'étude de phénomènes vibratoires, la mesure de vitesses de véhicules, des applications du domaine du transport aérien, etc. Leur fonctionnement consiste à émettre une onde optique cohérente en direction d'un volume-cible où est situé un objet ou un phénomène à étudier, et à recueillir une partie de cette onde qui est diffusée à partir du volume-cible. Dans un dispositif LIDAR cohérent, la partie recueillie de l'onde diffusée est soumise à une détection hétérodyne. La mesure de vitesse est déduite d'un décalage Doppler qui est mesuré dans un signal de la détection hétérodyne.

Toutefois, l'onde diffusée qui est recueillie peut provenir non seulement de l'objet qui est situé dans le volume-cible, vers lequel le dispositif LIDAR est pointé, mais aussi d'objets qui sont extérieurs au volume-cible et qui ont aussi une capacité significative à diffuser l'onde optique. Par exemple, pour une mesure anémométrique, l'onde est diffusée par des gouttelettes ou des poussières qui se trouvent dans le volume-cible et qui sont entraînées par le vent, mais un nuage qui est situé au-delà du volume-cible peut avoir une capacité de diffusion optique très supérieure aux gouttelettes et poussières du volume-cible. Dans ce cas, la présence du nuage à l'arrière-plan, avec éventuellement une vitesse de déplacement du nuage, peut gêner ou empêcher la détection de la partie d'onde qui est diffusée par le contenu du volume-cible. Une situation comparable est celle de la mesure de vitesse d'un écoulement fluide lorsqu'une paroi en arrière-plan produit elle-même une diffusion ou une réflexion importante de l'onde qui est émise par le dispositif LIDAR.

Les dispositifs LIDAR pour lesquels le système d'émission de l'onde optique est séparé d'un système de réception de l'onde diffusée permettent de sélectionner le volume-cible par rapport à l'arrière-plan. Les deux systèmes d'émission et de réception sont chacun orientés vers le volume-cible, si bien que celui-ci est sélectionné par rapport à l'arrière-plan, à l'intersection des directions de pointage respectives du système d'émission et du système de réception. Toutefois, de tels dispositifs LIDAR, dits bistatiques, nécessitent d'être installés avec précision pour sélectionner le volume-cible voulu, avec une distance de séparation entre les systèmes d'émission et de réception qui soit suffisante. Ils sont donc mal adaptés pour être utilisés à bord d'un véhicule ou d'un aéronef, notamment. Le plus souvent, ils peuvent difficilement être déplacés à cause de leur structure en plusieurs parties séparées. Enfin, les dispositifs LIDAR bistatiques sont mal appropriés pour réaliser une cartographie de la vitesse mesurée, en variant le volume-cible à l'intérieur d'un volume d'analyse beaucoup plus vaste.

Les dispositifs LIDAR monostatiques, pour lesquels les systèmes d'émission et de réception d'onde sont réunis, ne présentent pas ces inconvénients. Autrement dit, ils peuvent facilement être déplacés et utilisés à bord de véhicules et d'aéronefs. Par contre, les mesures de vitesse qui sont obtenues avec de tels dispositifs monostatiques peuvent être perturbées et empêchées par un élément diffusant qui est situé dans la direction de pointage, en arrière ou en avant du volume-cible, même si l'éloignement du volume-cible est pris en compte dans la détection hétérodyne.

Le document WO 2005/114253 divulgue un procédé de mesure d'une caractéristique vélocimétrique, qui utilise un dispositif de type LIDAR monostatique à détection hétérodyne.

En outre, un dispositif LIDAR monostatique permet de réaliser facilement une cartographie de vitesse mesurée, en variant la direction de pointage du dispositif pour balayer un champ d'analyse.

Pour sélectionner la partie utile du signal de détection hétérodyne qui contient l'information de mesure, par rapport à la partie du même signal de détection hétérodyne qui ne provient pas de l'objet étudié, il est connu de répéter l'acquisition du signal hétérodyne, d'analyser séparément les signaux de détection hétérodyne qui sont obtenus à chaque répétition, et de cumuler tous les résultats de ces analyses. Une telle accumulation consiste le plus souvent à additionner les résultats des analyses spectrales. Elle permet de séparer l'information de mesure qui concerne l'objet étudié lorsque cette information est constante, par rapport à un bruit d'arrière-plan qui est variable ou incohérent. Néanmoins, un tel traitement ne permet pas de distinguer entre deux objets qui sont situés dans la direction de pointage du dispositif LIDAR monostatique, et qui ont chacun une vitesse de déplacement sensiblement constante.

Enfin, il est aussi connu d'effectuer une détection synchrone de la partie d'onde qui est diffusée, pour la distinguer de contributions au signal détecté qui sont indépendantes de l'onde optique émise.

Dans ces conditions, un premier but de l'invention est de fournir des mesures de vitesse en utilisant un dispositif de type LIDAR monostatique à détection hétérodyne, qui ne présentent pas les inconvénients précédents.

Un second but de l'invention est que de telles mesures puissent être réalisées en utilisant des dispositifs LIDAR existant avant la présente invention, en modifiant peu et facilement ces dispositifs et leur utilisation.

En particulier, l'invention a pour but de mesurer des vitesses avec une sélectivité du volume-cible par rapport à l'avant-plan et à l'arrière-plan dans la direction de pointage, qui soit améliorée. Notamment, une telle sélectivité améliorée est recherchée pour réaliser des cartographies de mesures.

Enfin, un autre but de l'invention est de permettre des mesures avec un dispositif LIDAR qui soit peu encombrant, et dont la masse n'est pas augmentée significativement par rapport aux dispositifs existants.

Pour atteindre ces objectifs et d'autres, l'invention propose un procédé de mesure d'une caractéristique vélocimétrique ou vibrométrique qui utilise un dispositif de type LIDAR à détection hétérodyne, dans lequel un signal d'émission d'onde optique est produit en direction d'un volume-cible à partir d'une tête optique du dispositif, et un signal rétrodiffusé est recueilli à travers cette même tête optique, puis est détecté par détection hétérodyne de façon à produire un signal de détection hétérodyne. Autrement dit, le dispositif LIDAR qui est utilisé est du type LIDAR cohérent monostatique.

Le procédé comprend en outre les étapes suivantes pour un cycle de mesure :

/1/ produire une modulation d'une caractéristique de phase de l'onde optique dans le signal d'émission, telle qu'une modulation de fréquence ou une modulation de phase ;

/2/ démoduler le signal de détection hétérodyne par rapport à la modulation de la caractéristique de phase, en compensant un retard de propagation du signal d'émission et du signal rétrodiffusé entre la tête optique du dispositif et le volume-cible ;

/3/ combiner une analyse spectrale du signal de détection hétérodyne démodulé avec une accumulation pour des fenêtres temporelles successives de découpage, de façon à isoler une contribution au signal de détection hétérodyne qui provient du volume-cible ; et

/4/ obtenir un résultat de la mesure de caractéristique vélocimétrique ou vibrométrique, à partir d'une analyse d'effet Doppler de la contribution isolée à l'étape /3/,

De plus, dans un procédé qui est conforme à l'invention :

- la modulation est obtenue en décalant la caractéristique de phase de l'onde optique pendant des créneaux temporels successifs de modulation («successive modulation time-slots» en anglais), conformément à un pas d'incrément fixe qui est multiplié par des facteurs multiplicatifs q respectivement affectés aux créneaux temporels de modulation ;

- les facteurs multiplicatifs q sont déterminés suivant l'une des deux méthodes /i/ ou /ii/ suivantes, en utilisant une seule de ces méthodes pour tout le cycle de mesure :

/i/ les facteurs multiplicatifs q sont égaux à $b + a^p[n]$, où pour cette méthode /i/ :

n est un nombre entier qui est supérieur ou égal à quatre, et qui est constant pendant le cycle de mesure,

a et b sont deux autres nombres entiers, qui sont aussi constants pendant le cycle de mesure,

p est un facteur de puissance entier qui est positif ou nul, strictement inférieur à $\Phi(n)$, $\Phi$ étant la fonction indicatrice d'Euler, dite «totient» en anglais, et p ayant des valeurs variables qui sont affectées respectivement aux créneaux temporels de modulation,

$a^p[n]$ désigne la réduction de $a^p$ modulo n, et

a est choisi tel que $a[n]$ soit différent de zéro et de l'unité ;

/ii/ les facteurs multiplicatifs q sont égaux à $d + c \cdot (p+1) \cdot p/2 \, [n]$, où pour cette méthode /ii/ :

n est un nombre entier supérieur ou égal à quatre, constant pendant le cycle de mesure,

d et c sont deux nombres entiers, aussi constants pendant le cycle de mesure,

p est un facteur de variation entier positif ou nul, strictement inférieur à n, et avec des valeurs variables respectivement affectées aux créneaux temporels de modulation,

$d + c \cdot (p+1) \cdot p/2 \, [n]$ désigne la réduction de $d + c \cdot (p+1) \cdot p/2$ modulo n, et

c est choisi tel que c[n] soit différent de zéro.

La fonction indicatrice d'Euler $\Phi$, appelée «totient» en anglais, est une fonction qui associe à tout nombre n entier strictement positif, le nombre d'entiers strictement positifs inférieurs à n et premiers avec n. Il s'agit donc d'une fonction de l'ensemble des entiers strictement positifs à valeurs dans ce même ensemble des entiers strictement positifs. Si n est un nombre premier, alors $\Phi(n)$ est égal à n-1. De manière générale, tout nombre n admet la décomposition en facteurs premiers suivante : $n = \Pi p_i{}^\wedge k_i$, où le symbole n désigne le produit des $p_i$ nombres premiers portés à la puissance $k_i$, et le symbole ^ désigne l'opération de puissance. Alors la fonction indicatrice d'Euler a pour valeur $\Phi(n) = \Pi(p_i - 1)p_i{}^\wedge(k_i-1)$.

Lorsque que la caractéristique de phase qui est décalée selon l'invention est la fréquence f de l'onde optique du signal d'émission, les décalages de celle-ci pendant les créneaux temporels successifs de modulation sont $\Delta f = \Delta f_0$ x q, $\Delta f_0$ étant l'incrément fixe de fréquence. Alternativement, lorsque l'invention est appliquée à la phase initiale du signal d'émission, $\Delta \varphi = \Delta \varphi_0$ x q sont les décalages de la phase initiale de l'onde optique du signal d'émission, $\Delta \varphi_0$ étant l'incrément fixe de phase initiale.

Un procédé selon l'invention comporte donc les avantages qui sont procurés par un dispositif LIDAR monostatique à détection hétérodyne.

Il comporte aussi les avantages qui sont procurés par l'accumulation de résultats d'analyse ou de détection, notamment pour séparer l'information qui est utile pour la mesure par rapport à un bruit variable et incohérent qui est aussi détecté pendant le cycle de mesure.

En outre, l'application à la caractéristique de phase de l'onde optique, de décalages qui varient d'un créneau temporel au suivant, améliore la résolution spatiale le long de la direction de pointage du dispositif monostatique. Typiquement, l'invention procure une résolution spatiale de mesure, le long de la direction de pointage, qui est de l'ordre de C x $T_{mod}$ / 2, où C est la vitesse de propagation de l'onde optique, et $T_{mod}$ est la durée individuelle des créneaux temporels de modulation correspondant aux facteurs multiplicatifs q successifs.

L'invention est encore améliorée dans sa facilité de mise en oeuvre et/ou dans sa capacité à améliorer la résolution spatiale qui est obtenue, en utilisant l'un et/ou l'autre des perfectionnements suivants, dont les quatre premiers sont compatibles avec les deux méthodes /i/ et /ii/ de détermination des facteurs multiplicatifs q :

- les facteurs multiplicatifs q des créneaux temporels successifs de modulation peuvent former une séquence qui est répétée périodiquement pendant le cycle de mesure ;

- les facteurs multiplicatifs q successifs peuvent comprendre au moins trois valeurs différentes, et de préférence au moins cent valeurs différentes ;

- le nombre n peut être un nombre premier («prime number» en anglais) ;

- en particulier lorsque les facteurs multiplicatifs q sont déterminés suivant la méthode /i/, le nombre n peut être le double d'un nombre premier ;

- lorsque les facteurs multiplicatifs q sont déterminés suivant la méthode /i/, le nombre entier a peut être une racine primitive («primitive root» en anglais) du groupe-quotient multiplicatif (Z/nZ)* («quotient-group (Z/nZ)* under multiplication» en anglais), où Z est l'anneau des nombres entiers relatifs, indique que la valeur zéro est exclue, les facteurs multiplicatifs q étant alors $\Phi(n)$ valeurs distinctes pour p variant de 0 à $\Phi(n)$-1 ; et

- lorsque les facteurs multiplicatifs q sont déterminés suivant la méthode /ii/, le nombre entier c peut être un générateur d'un groupe-quotient additif (Z/nZ), où Z est l'anneau des nombres entiers relatifs, les facteurs multiplicatifs q étant alors n valeurs distinctes pour p variant de 0 à n-1.

Des mises en oeuvre de l'invention qui sont particulièrement préférées sont obtenues lorsque n est un nombre premier de l'ordre de quelques centaines, et a est l'une des racines primitives du groupe-quotient multiplicatif (Z/nZ)* pour la méthode /i/.

Dans des premiers modes de mise en oeuvre de l'invention, la caractéristique de phase de l'onde optique qui est décalée peut être une fréquence de cette onde optique, de façon à réaliser une modulation de fréquence. Dans ce cas, la durée individuelle des créneaux temporels de modulation est inférieure ou égale à la durée individuelle des fenêtres temporelles de découpage. L'étape /3/ comprend alors les sous-étapes suivantes :

/3-1/ analyser spectralement le signal de détection hétérodyne démodulé à l'intérieur d'une fenêtre temporelle de découpage, de façon à obtenir un résultat d'analyse spectrale pour cette fenêtre temporelle ; et

/3-2/ répéter la sous-étape /3-1/ pour plusieurs fenêtres temporelles successives de découpage, et accumuler les résultats d'analyse spectrale qui ont été obtenus respectivement pour ces fenêtres temporelles, la contribution au signal de détection hétérodyne qui provient du volume-cible étant prépondérante dans cette accumulation.

Dans des seconds modes de mise en oeuvre de l'invention, la caractéristique de phase de l'onde optique qui est décalée peut être une phase initiale de cette onde optique, de façon à réaliser une modulation de phase.

Selon une première possibilité pour une telle modulation de la phase, la durée individuelle des créneaux temporels de modulation peut être inférieure ou égale à la durée individuelle des fenêtres temporelles de découpage. Dans ce cas, l'étape /3/ peut comprendre les sous-étapes suivantes :

/3-1/ analyser spectralement le signal de détection hétérodyne démodulé à l'intérieur d'une fenêtre temporelle de découpage, de façon à obtenir un résultat d'analyse spectrale pour cette fenêtre temporelle ; et

/3-2/ répéter la sous-étape /3-1/ pour plusieurs fenêtres temporelles successives de découpage, et accumuler les résultats d'analyse spectrale qui ont été obtenus respectivement pour ces fenêtres temporelles, la contribution au signal de détection hétérodyne qui provient du volume-cible étant prépondérante dans cette accumulation.

Selon une seconde possibilité pour la modulation de phase, la durée individuelle des créneaux temporels de modulation peut être supérieure ou égale à la durée individuelle des fenêtres temporelles de découpage. Dans ce cas, l'étape /3/ peut comprendre les sous-étapes suivantes :

/3-1/ accumuler des segments du signal de détection hétérodyne démodulé qui correspondent à des fenêtres temporelles successives de découpage, pendant les créneaux temporels successifs de modulation de sorte que la contribution au signal de détection hétérodyne qui provient du volume-cible soit accumulée de façon constructive ; et

/3-2/ analyser spectralement un résultat de l'accumulation.

Enfin et d'une façon générale, l'invention est compatible avec l'utilisation d'un dispositif LIDAR qui est adapté pour produire un signal d'émission continu ou par impulsions.

L'invention propose aussi un dispositif LIDAR à détection hétérodyne, qui est du type monostatique et adapté pour effectuer des mesures vélocimétriques ou vibrométriques, et qui comprend les caractéristiques de la revendication 19.

Un tel dispositif LIDAR selon l'invention peut être facilement obtenu en modifiant ou en programmant de façon appropriée un dispositif connu antérieurement.

D'autres particularités et avantages de la présente invention apparaîtront dans la description ci-après d'exemples de mise en oeuvre non limitatifs, en référence aux dessins annexés, dans lesquels :

- les figures 1a et 2b montrent deux architectures de dispositifs LIDAR avec lesquelles l'invention peut être mise en oeuvre ;

- les figures 2a et 2b sont deux diagrammes qui montrent un résultat d'analyse de signal rétrodiffusé pour un premier mode de mise en oeuvre de l'invention ; et

- les figures 3a et 3b correspondent respectivement aux figures 2a et 2b pour un second mode de mise en oeuvre de l'invention.

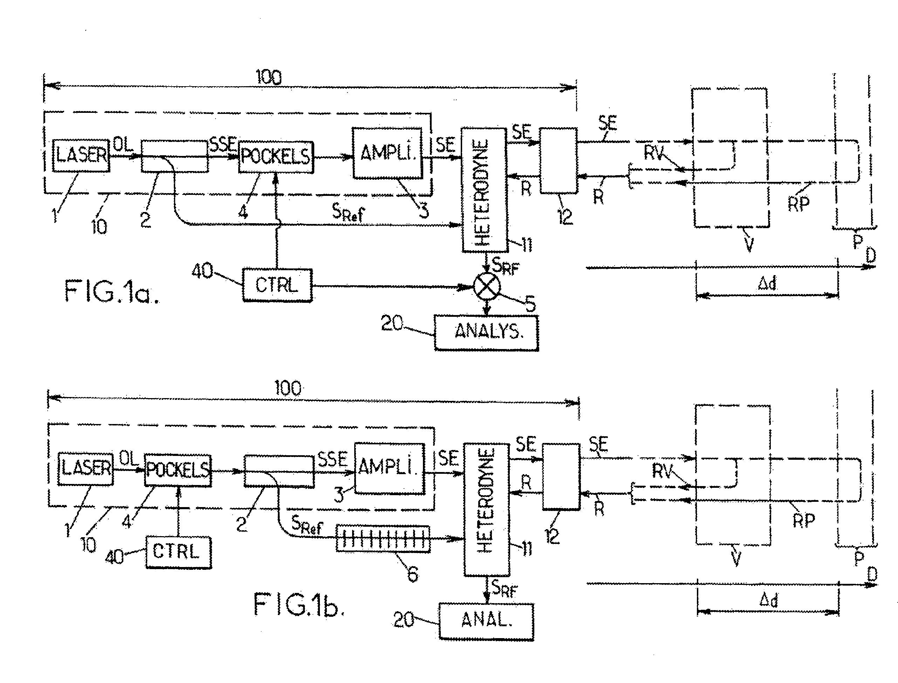

Dans les figures 1a et 1b, des éléments qui sont désignés par des références identiques sont eux-mêmes identiques ou ont des fonctions qui sont identiques. En outre, les références suivantes désignent les composants qui sont indiqués ci-après, et qui sont utilisés de la même façon que dans un dispositif LIDAR à détection hétérodyne, de type monostatique, tel que connu avant la présente invention :

100 : le dispositif LIDAR à détection hétérodyne dans son ensemble ;

1 : un oscillateur laser, qui est adapté pour produire une onde optique OL ;

2 : un séparateur optique, qui est disposé pour diviser l'onde optique OL en un signal de source d'émission SSE et un signal de référence $S_{Ref}$ ;

3: un amplificateur optique, qui est adapté pour produire un signal d'émission SE à partir du signal de source d'émission SSE ;

11 : une unité de mélange-détection («mixing and détection unit») ;

12: une tête optique, qui est adaptée pour transmettre le signal d'émission SE en direction d'un volume-cible et pour recevoir un signal rétrodiffusé R ; et

20 : des moyens d'analyse.

En outre, D désigne une direction de pointage du dispositif 100, qui est fixée par l'orientation de la tête optique 12. V est le volume-cible dans lequel se trouve l'objet dont une caractéristique vélocimétrique ou vibrométrique est recherchée. Par conséquent, la direction de pointage D est orientée vers le volume-cible V.

Une source parasite de rétrodiffusion P peut être située à une distance quelconque de la tête optique 12 le long de la direction de pointage D, au delà du volume-cible V ou entre le volume-cible V et cette tête optique 12. Dans ces conditions, le signal rétrodiffusé R qui est recueilli par la tête optique 12 comprend une première contribution RV qui est produite par l'objet situé dans le volume-cible V, et au moins une seconde contribution RP qui est produite par la source parasite de rétrodiffusion P. Dans la suite, la contribution RV est appelée contribution utile, et la contribution RP est appelée contribution parasite.

L'oscillateur laser 1, le séparateur optique 2 et l'amplificateur 3 peuvent appartenir à une unité laser d'émission 10, qui produit le signal d'émission SE. De façon connue et particulièrement avantageuse, chacun de ces composants peut être réalisé à partir d'au moins une fibre optique qui conduit l'onde optique OL ou les signaux SSE, $S_{Ref}$ ou SE. De façon courante, l'onde optique OL et les signaux SSE, $S_{Ref}$ et SE appartiennent à la bande de rayonnement électromagnétique infrarouge, pour laquelle la longueur d'onde est comprise entre 1,535 $\mu$m et 1,565 $\mu$m (micromètre).

L'unité de mélange-détection 11 est adaptée pour transmettre le signal d'émission SE à la tête optique 12, et pour produire un signal de détection hétérodyne $S_{RF}$ à partir du signal rétrodiffusé R qui est reçu par la tête optique 12 et du signal de référence $S_{ref}$.

Les moyens d'analyse 20 sont adaptés pour analyser le signal de détection hétérodyne $S_{RF}$. D'une façon qui est couramment utilisée, ces moyens d'analyse 20 découpent le signal de détection hétérodyne $S_{RF}$ en segments de signal selon des fenêtres temporelles successives de découpage. Ils réalisent alors une combinaison d'opérations d'analyse spectrale et d'accumulation, ainsi qu'une analyse d'effet Doppler.

Le dispositif 100 peut comprendre aussi d'autres composants, d'une façon qui est usuelle pour des dispositifs LIDAR à détection hétérodyne. De tels composants ne sont pas repris dans la présente description, dans la mesure où ils n'ont pas de liaison directe avec l'objet de l'invention.

En plus des composants précédents, un dispositif 100 selon l'invention comprend :

- un modulateur de phase 4, pour moduler au moins le signal de source d'émission SSE ;

- une unité de commande 40, pour commander un fonctionnement du modulateur de phase 4 ; et

- des moyens de compensation d'un retard de propagation du signal d'émission SE et du signal rétrodiffusé R entre la tête optique 12 et le volume-cible V.

Le modulateur de phase 4 peut comprendre une cellule de Pockels. Une telle cellule de Pockels produit un champ électrique variable à l'intérieur d'un matériau actif qui est adapté pour modifier la phase d'une onde optique en fonction du champ électrique. De tels modulateurs de phase sont aussi bien connus de l'Homme du métier.

Alternativement, le modulateur de phase 4 peut comprendre quatre cellules de Pockels qui sont agencées pour former un modulateur de type Dual Parallel Mach-Zehnder. De tels modulateurs qui modifient à la fois la phase et l'intensité d'une onde optique sont aussi connus.

Dans le dispositif 100 de la figure 1a, le modulateur de phase 4 est disposé pour recevoir en entrée le signal de source d'émission SSE qui est produit par le séparateur optique 2, et pour transmettre en sortie le signal de source d'émission modulé à l'amplificateur optique 3. Autrement dit, le modulateur 4 est situé entre le séparateur 2 et l'amplificateur 3. Dans ce premier cas, seul le signal d'émission SE comporte la modulation qui est produite par le modulateur 4. Le signal de détection hétérodyne $S_{RF}$ qui est produit par l'unité de mélange-détection 11 est alors démodulé avant d'être transmis aux moyens d'analyse 20. Pour cela, le dispositif comprend en outre des moyens de démodulation 5 qui sont agencés pour démoduler le signal de détection hétérodyne $S_{RF}$ conformément au fonctionnement du modulateur de phase 4. Les moyens de compensation du retard de propagation du signal d'émission SE et de la contribution utile RV sont agencés pour compenser ce retard lors de la démodulation. Dans une réalisation avantageuse, les moyens de démodulation 5 peuvent être numériques et incorporer les moyens de compensation du retard.

Dans le dispositif alternatif 100 de la figure 1b, le modulateur de phase 4 est disposé pour recevoir en entrée l'onde optique OL qui est produite par l'oscillateur laser 1, et pour transmettre en sortie cette onde optique modulée au séparateur optique 2. Autrement dit, le modulateur 4 est situé entre le l'oscillateur laser 1 et le séparateur 2. Dans ce second cas, le signal de source d'émission SSE et le signal de référence $S_{Ref}$ sont modulés d'une façon identique. Les moyens de compensation du retard de propagation du signal d'émission SE et de la contribution utile RV sont alors agencés pour retarder le signal de référence $S_{Ref}$ qui est transmis à l'unité de mélange-détection 11. Par exemple, les moyens de compensation du retard peuvent comprendre une ligne à retard 6 qui est interposée sur la ligne de transmission du signal de référence $S_{Ref}$, entre le séparateur 2 et l'unité de mélange-détection 11.

Les deux dispositifs 100 des figures 1a et 1b sont équivalents vis-à-vis de l'invention, si bien que toutes les mises en oeuvre de l'invention qui sont décrites dans la suite peuvent utiliser indifféremment l'un ou l'autre de ces dispositifs. A titre d'illustration, le dispositif 100 de la figure 1b est adopté dans la suite de cette description.

Par ailleurs, l'Homme du métier sait aussi comment commander le fonctionnement du modulateur de phase 4 pour créer une modulation de fréquence ou une modulation de phase de l'onde optique OL. Il est seulement rappelé que la phase d'une onde optique est de la forme $2\pi \cdot f \cdot t + \varphi$, où f et $\varphi$ sont respectivement la fréquence et la phase initiale de l'onde, et t le temps. La modulation de fréquence consiste à faire varier dans le temps la fréquence f, et la modulation de phase consiste à faire varier dans le temps la phase initiale $\varphi$.

On décrit maintenant la modulation qui est introduite selon l'invention. Dans un premier temps, l'expression de caractéristique de phase désigne aussi bien la fréquence f que la phase initiale $\varphi$.

La durée de détection du signal rétrodiffusé R, pour un même cycle de mesure, est divisée en créneaux temporels de modulation successifs. Cette division en créneaux temporels est prévue pour la modulation du signal de source d'émission SSE. Elle est indépendante a priori du découpage de la même durée en fenêtres temporelles successives pour l'analyse du signal de détection hétérodyne $S_{RF}$.

La modulation est produite en décalant la caractéristique de phase d'une façon qui est constante à l'intérieur de chaque créneau temporel, et qui varie d'un créneau temporel à un autre. Selon l'invention, ce décalage est multiple d'un incrément fixe, conformément à la formule suivante :

$$\Delta(C_{phase}) = \Delta(C_{phase})_0 \times q \qquad (1)$$

où $C_{phase}$ est la caractéristique de phase qui est modulée, $\Delta(C_{phase})$ est le décalage de cette caractéristique $C_{phase}$ à l'intérieur de chaque créneau temporel de modulation, $\Delta(C_{phase})_0$ est l'incrément fixe et q le facteur multiplicatif qui est affecté à ce créneau temporel.

En outre, selon une première alternative de l'invention désignée par /i/, le facteur multiplicatif q est donné par la formule suivante :

$$q = b + a^p[n] \qquad (2)$$

où : n est un nombre entier qui est supérieur ou égal à quatre,
a et b sont deux autres nombres entiers tel que $a^p[n]$ soit différent de zéro et de l'unité, et
p est un facteur de puissance entier positif ou nul, strictement inférieur à $\Phi(n)$, $\Phi$ étant la fonction indicatrice d'Euler.

Les nombres n, a et b sont constants pendant chaque cycle de mesure. Ils peuvent être fixés définitivement par une programmation initiale de l'unité de commande 40.

Dans cette première alternative /i/, le facteur de puissance p prend des valeurs qui varient pour des créneaux temporels différents. De préférence, il peut prendre toutes les valeurs entières de 0 à $\Phi(n)-1$, dans un ordre quelconque pour une série de créneaux temporels successifs. Toutefois, l'ordre croissant de ces valeurs de p : 0, puis 1, puis 2,... , jusqu'à $\Phi(n)-1$ est préféré. Eventuellement, seulement un nombre restreint de ces valeurs peuvent être utilisées pour le facteur de puissance p. Le facteur multiplicatif q et le décalage $\Delta(C_{phase})$ varient donc en conséquence. $b + a^p[n]$ désigne la réduction de $b + a^p$ modulo n. Autrement dit, le facteur multiplicatif q du décalage $\Delta(C_{phase})$ de la caractéristique de phase est le reste d'une division euclidienne de $b + a^p$ par n. La valeur du facteur multiplicatif q pour chaque créneau temporel de la modulation est donc elle-même un nombre entier positif ou nul.

D'une façon générale, les nombres entiers a et b peuvent être négatifs, mais le nombre entier a peut être sélectionné entre l'unité et n, ces deux valeurs étant exclues.

Mathématiquement, les valeurs successives du facteur multiplicatif q pour cette première alternative /i/ de l'invention, sont les éléments d'un sous-groupe du groupe-quotient $(Z/nZ)^*$ doté de l'opération de multiplication.

Selon une seconde alternative de l'invention désignée par /ii/, le facteur multiplicatif q est donné par la formule suivante :

$$q = d + c \cdot (p+1) \cdot p/2 \ [n] \hspace{3cm} (2')$$

où : n est encore un nombre entier qui est supérieur ou égal à quatre,

d et c sont deux autres nombres entiers, avec c tel que c[n] soit différent de zéro, et

p est maintenant un facteur de variation entier positif ou nul, strictement inférieur à n.

Les nombres n, d et c sont constants pendant chaque cycle de mesure. Ils peuvent aussi être fixés définitivement par une programmation initiale de l'unité de commande 40.

Dans cette seconde alternative /ii/, le facteur de variation p prend encore des valeurs qui varient pour des créneaux temporels différents. De préférence, il peut prendre toutes les valeurs entières de 0 à n-1, dans un ordre quelconque pour une série de créneaux temporels successifs. Toutefois, l'ordre croissant de ces valeurs de p : 0, puis 1, puis 2,... , jusqu'à n-1 est préféré. Eventuellement, seulement un nombre restreint de ces valeurs peuvent être utilisées pour le facteur de variation p. Le facteur multiplicatif q et le décalage $\Delta(C_{phase})$ varient donc en conséquence. d + c·(p+1)·p/2 [n] désigne la réduction de d + c·(p+1)·p/2 modulo n. Autrement dit, le facteur multiplicatif q du décalage $\Delta(C_{phase})$ de la caractéristique de phase est le reste d'une division euclidienne de d + c·(p+1)·p/2 par n. La valeur du facteur multiplicatif q pour chaque créneau temporel de la modulation est donc elle-même encore un nombre entier positif ou nul.

D'une façon générale, les nombres entiers d et c peuvent être négatifs, mais le nombre entier c peut être sélectionné entre zéro et n, ces deux valeurs étant exclues.

Mathématiquement, les valeurs successives du facteur multiplicatif q pour cette seconde alternative /ii/ de l'invention, sont les éléments d'un sous-groupe du groupe-quotient (Z/nZ) doté de l'opération d'addition.

De façon générale, un décalage $\Delta(C_{phase})$ de la caractéristique de phase $C_{phase}$ qui a été introduit dans le signal d'émission SE, apparaît dans la contribution parasite RP avec un retard temporel, par rapport au même décalage $\Delta(C_{phase})$ dans la contribution utile RV. Ce retard est dû à l'écart $\Delta d$ entre les éloignements respectifs du volume-cible V et de la source parasite P, selon la direction D. A l'inverse, un même décalage $\Delta(C_{phase})$ apparaît d'abord dans la contribution parasite RP si la source parasite P est située entre le dispositif 100 et le volume-cible V. Lorsque l'écart d'éloignement $\Delta d$ est supérieur en valeur absolue à C x $T_{mod}/2$, où C est la vitesse de propagation du signal d'émission SE et $T_{mod}$ est la durée individuelle des créneaux temporels de modulation, la contribution parasite RP et le signal de référence $S_{Ref}$ présentent entre eux, lors de la détection hétérodyne, des différences successives de la caractéristique de phase $C_{phase}$ qui sont variables. Il en résulte un étalement des valeurs de la caractéristique de phase $C_{phase}$ qui sont relatives à la contribution parasite RP, dans l'accumulation qui est réalisée par les moyens d'analyse 20. A l'inverse, le retard de propagation de la contribution utile RV est compensé lors de la démodulation du signal de détection hétérodyne $S_{RF}$ (figure 1a), ou par la ligne à retard 6 (figure 1 b). La contribution utile RV ne fait donc pas apparaître de décalage variable de la caractéristique de phase $C_{phase}$ dans le signal de détection hétérodyne $S_{RF}$ qui est analysé, pendant tout le cycle de mesure. De cette façon, la contribution utile RV devient prépondérante dans l'accumulation qui est réalisée par les moyens d'analyse 20 après une durée d'accumulation suffisante. Ainsi, la contribution utile RV peut être isolée dans le signal rétrodiffusé R, pour en déduire la vitesse du ou des objet(s) qui est (sont) situé(s) dans le volume-cible V. Cette ou ces vitesse(s) est (sont) déduite(s) en effectuant une analyse d'effet Doppler qui est bien connue de l'Homme du métier.

De préférence, lorsque l'alternative /i/ de l'invention est utilisée, n est un nombre premier, ou le double d'un nombre premier, suffisamment grand et a est une racine primitive, aussi désignée par générateur, du groupe-quotient (Z/nZ)* doté de la multiplication, dont la valeur nulle est exclue. Dans ce cas, le facteur multiplicatif q peut prendre successivement $\Phi(n)$ valeurs, $\Phi$ désignant encore la fonction indicatrice d'Euler, qui sont toutes différentes : $b+a^0[n]=b+1[n]$, $b+a^1[n]=,b+a[n]$, $b+a^2[n]$, ..., $b+a^{n-2}[n]$. Ces valeurs de q sont alors suffisamment nombreuses pour produire un étalement efficace pour la contribution parasite RP. Cet étalement peut permettre de réduire le nombre de fenêtres temporelles successives pendant lesquelles la détection et l'analyse du signal rétrodiffusé R sont répétées, pour séparer la contribution utile RV de la contribution parasite RP. Cette séparation est efficace même si la contribution parasite RP est plus beaucoup intense que la contribution utile RV. Par exemple, n peut être égal à 173 et a peut être égal à 11 ou 17, ou n peut être égal 317 et a peut encore être égal à 17.

D'une manière similaire lorsque l'alternative /ii/ de l'invention est utilisée, n est de préférence encore un nombre premier suffisamment grand, d est un nombre entier quelconque et c, qui est choisi tel que c[n] soit différent de zéro, est un générateur du groupe-quotient (Z/nZ) doté de l'addition. Dans ce cas, le facteur multiplicatif q peut prendre successivement n valeurs qui sont choisies parmi (n+1)/2 valeurs toutes différentes. De même que précédemment, ces valeurs de q suffisamment nombreuses produisent un étalement de la contribution parasite RP, et par suite permettent encore de séparer efficacement la contribution utile RV de la contribution parasite RP.

Les figures qui sont présentées dans la suite de cette description se rapportent à une mise en oeuvre de l'invention conforme à la première alternative /i/. Pour obtenir une illustration claire du principe de l'invention, n est pris égal à 7, b égal à 0 et a égal à 3, 3 étant une racine primitive du groupe-quotient multiplicatif $(Z/7Z)^*$. Les valeurs du facteur de puissance p et celles du facteur multiplicatif q forment deux séquences qui sont répétées avec une durée de période égale à $6 \times T_{mod}$.

En général, la durée $T_{mod}$ des créneaux temporels de la modulation est choisie de sorte que son inverse $1/T_{mod}$ appartienne au domaine des radiofréquences (RF). La détection hétérodyne qui est réalisée par l'unité de mélange-détection 11 comprend alors une étape de démodulation RF.

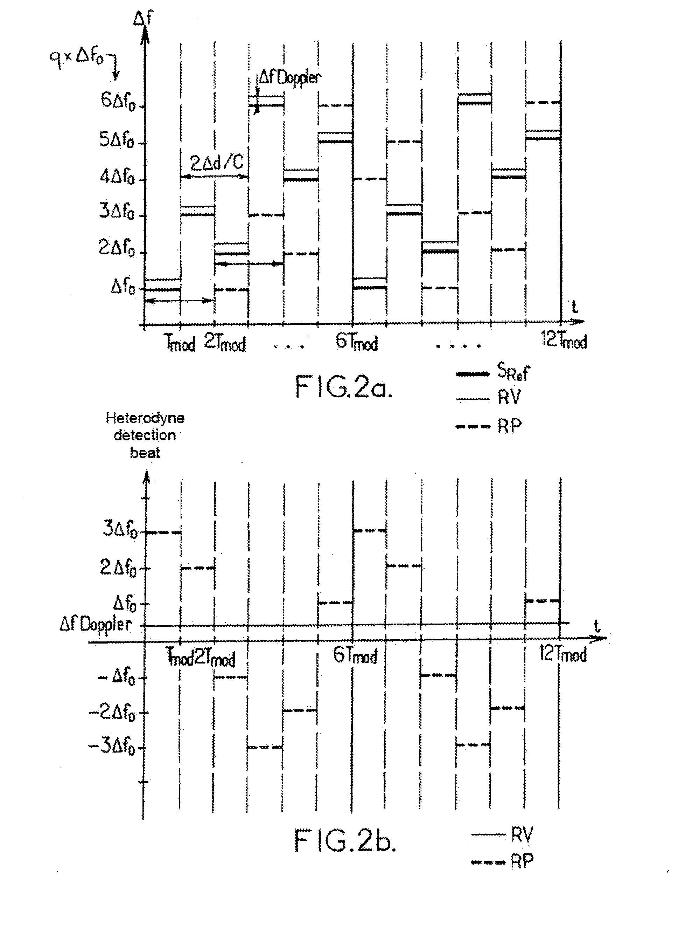

Dans le premier mode de mise en oeuvre de l'invention qui est décrit maintenant, en référence aux figures 2a et 2b, la caractéristique de phase $C_{phase}$ qui est modulée de la façon qui vient d'être décrite, est la fréquence f. Ainsi, l'invention introduit une modulation de fréquence pour l'onde optique du signal d'émission SE. Dans ce cas, la relation (1) devient :

$$\Delta f = \Delta f_0 \times q \qquad\qquad (1')$$

où $\Delta f_0$ est un incrément fixe de fréquence. Par exemple, $\Delta f_0$ peut être de l'ordre de $10^{-8} \times f$, étant la fréquence de l'onde optique OL qui est produite par l'oscillateur laser 1.

Le diagramme de la figure 2a montre, en fonction du temps noté t, les décalages de fréquence respectifs du signal de référence $S_{Ref}$ d'une part, de la contribution utile RV au signal rétrodiffusé R qui est produite par le contenu du volume-cible V d'autre part, et de la contribution parasite RP au même signal rétrodiffusé R par ailleurs, tels que ces décalages sont synchronisés pour la détection hétérodyne. La fréquence de la contribution utile RV est modulée à chaque instant comme celle du signal de référence $S_{Ref}$, avec un écart $\Delta f_{Doppler}$ par rapport à celle-ci qui correspond à l'effet Doppler qui est provoqué par le déplacement du contenu du volume-cible V. A la différence, la fréquence de la contribution parasite RP est modulée comme le signal de référence $S_{Ref}$, mais avec un retard qui est égal au temps supplémentaire de propagation pour la contribution parasite RP. Ce temps supplémentaire de propagation est $2 \times \Delta d/C$, et est pris égal à $2 \cdot T_{mod}$ pour les figures 2a et 2b, à titre d'illustration. En outre, on a supposé pour ces figures que la contribution parasite RP ne présentait pas d'effet Doppler dû à un déplacement de la source parasite P. Néanmoins, un tel déplacement de la source parasite P ne modifie pas l'efficacité de l'invention pour isoler la contribution utile RV.

Le diagramme de la figure 2b montre, encore en fonction du temps t, les fréquences de battement qui apparaissent lors de la détection hétérodyne pour la contribution utile RV et pour la contribution parasite RP. Il correspond aux décalages de fréquence $\Delta f$ qui sont indiqués dans la figure 2a. Ces fréquences de battement correspondent à l'écart à chaque instant, entre les fréquences respectives de la contribution utile RV et du signal de référence $S_{Ref}$ d'une part, et entre les fréquences respectives de la contribution parasite RP et du signal de référence $S_{Ref}$ d'autre part. Elles peuvent être déterminées numériquement. Pour la contribution utile RV, la fréquence du battement est constante sur toute la durée du cycle de mesure, et est égale à $\Delta f_{Doppler}$. Grâce à l'invention, la fréquence du battement pour la contribution parasite RP prend les valeurs $-3 \times \Delta f_0$, $-2 \times \Delta f_0$, $-\Delta f_0$, $+\Delta f_0$, $+2 \times \Delta f_0$ et $+3 \times \Delta f_0$, dans un ordre qui dépend de n, de a, de b et de l'ordre des valeurs du facteur de puissance p. L'ordre des valeurs successives de la fréquence de battement pour la contribution parasite RP n'a aucune fonction d'information de mesure. Ainsi, lorsque le signal de détection hétérodyne $S_{RF}$ est analysé spectralement, la contribution parasite RP est dispersée sur les fréquences $-3 \times \Delta f_0$, $-2 \times \Delta f_0$, $-\Delta f_0$, $+\Delta f_0$, $+2 \times \Delta f_0$ et $+3 \times \Delta f_0$, alors que la contribution utile RV reste concentrée à $\Delta f_{Doppler}$. Cette dernière apparaît donc avec une amplitude prépondérante dans le résultat de l'accumulation. Elle est isolée puis analysée de façon usuelle pour obtenir le résultat de mesure vélocimétrique ou vibrométrique.

Ce mode de mise en oeuvre de l'invention par modulation de la fréquence est particulièrement adapté pour mesurer une vitesse anémométrique. Il peut alors être mis en oeuvre à bord d'un aéronef, notamment pour fournir une mesure de référence de la vitesse du vent. En particulier, la vitesse du vent peut ainsi être mesurée à plus de 400 m (mètre) de l'aéronef, de sorte que l'écoulement d'air dans la portion-cible V, à l'origine du résultat de la mesure, n'est pas perturbé par le déplacement de l'aéronef lui-même. Pour cela, la durée individuelle $T_{mod}$ des créneaux temporels de modulation peut être comprise entre 0,2 $\mu s$ (microseconde) et 10 $\mu s$. Par exemple, $T_{mod}$ peut être prise égale à 2 $\mu s$, ce qui permet de séparer dans le signal rétrodiffusé R la contribution utile qui provient d'une distance sélectionnée par rapport à des contributions parasites qui proviennent d'autres distances, différentes de plus de 300 m par rapport à la distance sélectionnée.

Dans une telle application de mesure anémométrique, les objets à l'origine de la contribution utile RV sont des poussières ou des gouttelettes qui sont situées à l'intérieur du volume-cible V. Leur contribution RV au signal rétrodiffusé R peut alors être considérablement moins intense qu'une contribution parasite RP d'un nuage plus éloigné, mais qui est aussi situé dans la direction de pointage P. Grâce à l'invention, la contribution utile RV peut néanmoins être séparée et analysée pour en déduire une mesure précise de la vitesse du vent à la distance qui est sélectionnée à partir de l'aéronef.

Dans les seconds modes de mise en oeuvre de l'invention qui sont décrits ci-dessous, la caractéristique de phase $C_{phase}$ qui est modulée selon l'invention est la phase initiale $\varphi$. Ainsi, l'onde optique du signal d'émission SE est modulée en phase par l'invention, et la relation (1) devient :

$$\Delta\varphi = \Delta\varphi_0 \times q \qquad\qquad (1")$$

où $\Delta\varphi_0$ est l'incrément fixe de phase initiale. De préférence, cet incrément fixe $\Delta\varphi_0$ est pris égal à $2\cdot\pi/n$, afin que la modulation produise un étalement maximal de la contribution parasite RP.

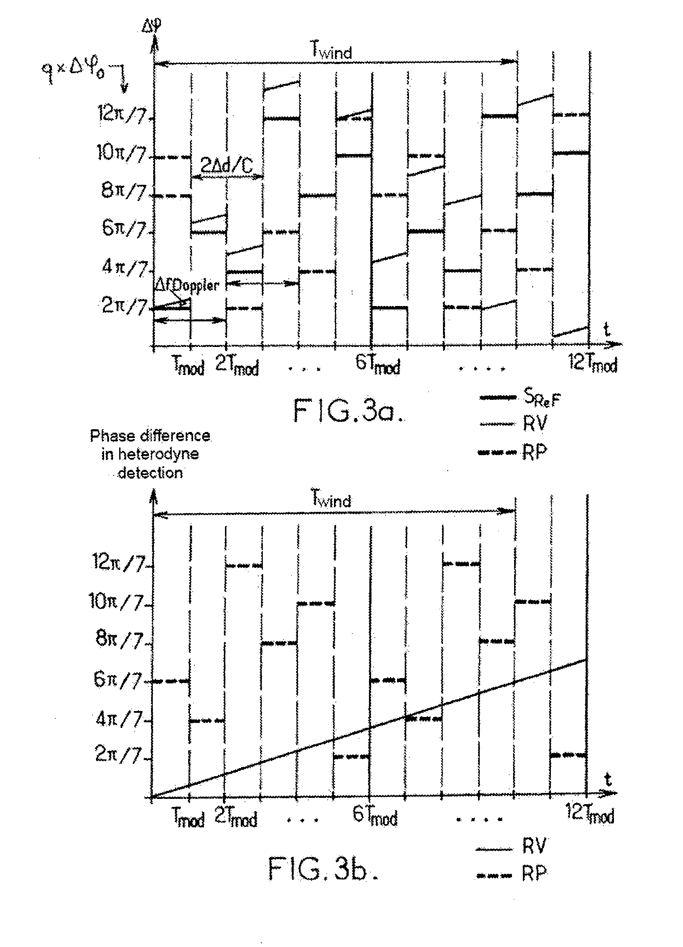

Les figures 3a et 3b sont obtenues de la même façon que les figures 2a et 2b, de sorte que l'Homme du métier comprendra l'illustration correspondante de l'invention sans qu'il soit nécessaire de répéter le mode d'obtention de ces figures. De nouveau, la durée de chaque fenêtre temporelle du découpage d'analyse est plus longue que celle de chaque créneau temporel de la modulation, cette modulation portant maintenant sur la phase initiale $\varphi$. L'effet Doppler de la contribution utile RV apparaît maintenant comme un décalage de phase supplémentaire, qui croît linéairement et qui s'ajoute au décalage $\Delta\varphi$ de la modulation de la phase initiale pour la contribution utile RV. $\Delta f_{Doppler}$ est alors la pente de la variation de $\Delta\varphi$ à l'intérieur de chaque créneau temporel de modulation. Afin d'obtenir une mesure constante de l'écart de phase qui est produit par l'effet Doppler, notamment à la fin de chaque fenêtre temporelle du découpage d'analyse, il est préférable que la durée individuelle $T_{mod}$ des créneaux temporels de modulation soit un diviseur de la durée de la fenêtre temporelle du découpage d'analyse, qui est notée $T_{déc}$. Le signal de détection hétérodyne $S_{RF}$ est d'abord démodulé par rapport aux sauts de phase initiale, puis analysé spectralement. Lors de cette analyse spectrale, la contribution utile RV n'est pas atténuée, alors que la contribution parasite RP est combinée pour l'alternative /i/ de l'invention avec une fonction de sinus cardinal au carré, dont la largeur est égale à $1/T_{mod}$. Ainsi, ce type de modulation de phase produit encore une dispersion spectrale, sélectivement pour la contribution parasite RP. Les résultats de cette analyse spectrale pour les fenêtres successives de découpage temporel sont cumulés pour isoler la contribution utile RV, puis l'analyse d'effet Doppler fournit le résultat de la mesure vélocimétrique ou vibrométrique.

Un tel mode de mise en oeuvre de l'invention par modulation de phase est particulièrement adapté pour mesurer en laboratoire une vitesse d'écoulement. Elle permet en effet de distinguer efficacement la contribution de l'écoulement dans le signal rétrodiffusé R qui est recueilli, par rapport à une contribution de réflexion du signal d'émission qui est produite par une paroi fixe d'arrière-plan.

Enfin, dans une variante de la mise en oeuvre de l'invention par modulation de phase, la durée individuelle $T_{mod}$ des créneaux temporels de modulation est supérieure à la durée individuelle $T_{déc}$ de la fenêtre temporelle du découpage d'analyse. Le signal de détection hétérodyne $S_{RF}$, démodulé par rapport aux sauts de phase initiale, est d'abord découpé en segments qui correspondent aux fenêtres temporelles. Ces segments sont ensuite accumulés, c'est-à-dire additionnés les uns aux autres, sur toute la durée du cycle de mesure. Cette accumulation est constructive pour la contribution utile RV et destructive pour la contribution parasite RP. De préférence, la durée individuelle $T_{mod}$ des créneaux temporels de modulation est un multiple de la durée individuelle $T_{déc}$ de la fenêtre temporelle du découpage d'analyse. Autrement dit, $T_{mod} = z \times T_{déc}$, où z est un nombre entier strictement positif. En effet, la phase initiale est alors constante à l'intérieur de chaque fenêtre temporelle. Dans le cas où les facteurs multiplicatifs q sont déterminés selon l'alternative /i/ de l'invention, z est préférentiellement égal à $\Phi(n)$, $\Phi$ étant la fonction indicatrice d'Euler, et l'accumulation de toutes les valeurs de la phase initiale $\varphi$ pour la contribution parasites RP est de module égal à 1, alors que la même accumulation pour la contribution utile RV est de module égal à $\Phi(n)$. Dans l'autre cas où les facteurs multiplicatifs q sont déterminés selon l'alternative /ii/ de l'invention, z est préférentiellement égal à n et l'accumulation de toutes les valeurs de la phase initiale $\varphi$ pour la contribution parasites RP est égale à 0, alors que la même accumulation pour la contribution utile RV est de module égal à n. Pour cette variante de mise en oeuvre par modulation de phase, l'invention produit donc plutôt une atténuation de la contribution parasite RP, au lieu d'une dispersion spectrale de celle-ci. L'analyse spectrale puis l'analyse d'effet Doppler sont effectuées finalement sur le résultat de l'accumulation, pour obtenir le résultat de la mesure vélocimétrique ou vibrométrique.

Il est entendu que l'invention peut être appliquée en introduisant des adaptations par rapport aux modes de mise en oeuvre qui ont été décrits en détail ci-dessus. En particulier, la modulation qui est introduite par l'invention peut être appliquée à une onde optique qui est continue comme cela a été décrit, ou bien qui est produite sous forme d'impulsions successives. En outre, l'invention peut être utilisée non seulement pour réaliser une mesure de vitesse du contenu du volume-cible, mais aussi pour mesurer d'autres caractéristiques vélocimétriques ou vibrométriques, telles qu'une largeur de distribution de vitesse, une fréquence de vibration, une amplitude de vibration, etc.

## Revendications

**1.** Procédé de mesure d'une caractéristique vélocimétrique ou vibrométrique utilisant un dispositif de type LIDAR à détection hétérodyne (100), dans lequel un signal d'émission d'onde optique (SE) est produit en direction d'un volume-cible (V) à partir d'une tête optique dudit dispositif, et un signal rétrodiffusé (R) est recueilli par ladite tête optique, puis ledit signal rétrodiffusé est détecté par détection hétérodyne de façon à produire un signal de détection hétérodyne ($S_{RF}$),

ledit procédé comprenant les étapes suivantes pour un cycle de mesure :

/1/ produire une modulation d'une caractéristique de phase de l'onde optique dans le signal d'émission (SE) ;

/2/ démoduler le signal de détection hétérodyne ($S_{RF}$) par rapport à la modulation de la caractéristique de phase, en compensant un retard de propagation du signal d'émission (SE) et du signal rétrodiffusé (R) entre la tête optique du dispositif (100) et le volume-cible (V) ;

/3/ isoler une contribution au signal de détection hétérodyne provenant du volume-cible (V) ; et

/4/ obtenir un résultat de la mesure de caractéristique vélocimétrique ou vibrométrique, à partir d'une analyse d'effet Doppler de la contribution isolée à l'étape /3/,

le procédé étant **caractérisé en ce que** la contribution au signal de détection hétérodyne qui provient du volume-cible est isolée à l'étape /3/ en combinant une analyse spectrale du signal de détection hétérodyne ($S_{RF}$) démodulé avec une accumulation pour des fenêtres temporelles successives de découpage ($T_{déc}$).
et **en ce que** :

- la modulation est obtenue en décalant la caractéristique de phase de l'onde optique pendant des créneaux temporels successifs de modulation ($T_{mod}$), conformément à un pas d'incrément fixe multiplié par des facteurs multiplicatifs q respectivement affectés aux dits créneaux temporels de modulation ;
- les facteurs multiplicatifs q sont déterminés suivant l'une des deux méthodes /i/ ou /ii/ suivantes, en utilisant une seule des dites méthodes pour tout le cycle de mesure :

/i/ les facteurs multiplicatifs q sont égaux à $b + a^p[n]$, où pour ladite méthode /i/ :

n est un nombre entier supérieur ou égal à quatre, constant pendant le cycle de mesure,
a et b sont deux autres nombres entiers, aussi constants pendant le cycle de mesure,
p est un facteur de puissance entier positif ou nul, strictement inférieur à $\Phi(n)$, $\Phi$ étant une fonction indicatrice d'Euler, et p ayant des valeurs variables respectivement affectées aux créneaux temporels de modulation,
$b + a^p[n]$ désigne la réduction de $b + a^p$ modulo n, et
a est choisi tel que $a[n]$ soit différent de zéro et de l'unité ;

/ii/ les facteurs multiplicatifs q sont égaux à $d + c \cdot (p+1) \cdot p/2 \, [n]$, où pour ladite méthode /ii/ :

n est un nombre entier supérieur ou égal à quatre, constant pendant le cycle de mesure,
d et c sont deux nombres entiers, aussi constants pendant le cycle de mesure,
p est un facteur de variation entier positif ou nul, strictement inférieur à n, et avec des valeurs variables respectivement affectées aux créneaux temporels de modulation,
$d + c \cdot (p+1) \cdot p/2 \, [n]$ désigne la réduction de $d + c \cdot (p+1) \cdot p/2$ modulo n, et
c est choisi tel que $c[n]$ soit différent de zéro.

**2.** Procédé selon la revendication 1, suivant lequel les facteurs multiplicatifs q des créneaux temporels successifs de modulation ($T_{mod}$) forment une séquence qui est répétée périodiquement pendant le cycle de mesure.

**3.** Procédé selon la revendication 1 ou 2, suivant lequel les facteurs multiplicatifs q successifs comprennent au moins trois valeurs différentes.

**4.** Procédé selon la revendication 3, suivant lequel les facteurs multiplicatifs q successifs comprennent au moins cent valeurs différentes.

**5.** Procédé selon l'une quelconque des revendications 1 à 4, suivant lequel le nombre n est premier.

**6.** Procédé selon l'une quelconque des revendications 1 à 4, suivant lequel le nombre n est le double d'un nombre premier.

**7.** Procédé selon l'une des revendications 5 ou 6, suivant lequel les facteurs multiplicatifs q sont déterminés suivant la méthode /i/. et suivant lequel le nombre entier a est une racine primitive d'un groupe-quotient multiplicatif $(Z/nZ)^*$, où Z est l'anneau des nombres entiers relatifs, * indique que la valeur zéro est exclue, les facteurs multiplicatifs q étant $\Phi(n)$ valeurs distinctes pour p variant de 0 à $\Phi(n)-1$.

**8.** Procédé selon la revendication 5, suivant lequel les facteurs multiplicatifs q sont déterminés suivant la méthode /ii/, et suivant lequel le nombre entier c est un générateur d'un groupe-quotient additif $(Z/nZ)$, où Z est l'anneau des nombres entiers relatifs, les facteurs multiplicatifs q étant sélectionnés parmi $(n+1)/2$ valeurs distinctes pour p variant de 0 à n-1.

**9.** Procédé selon l'une quelconque des revendications 1 à 8, suivant lequel la caractéristique de phase de l'onde optique qui est décalée est une fréquence (f) de ladite onde optique, de façon à réaliser une modulation de fréquence, et suivant lequel une durée individuelle des créneaux temporels de modulation ($T_{mod}$) est inférieure ou égale à une durée individuelle des fenêtres temporelles de découpage ($T_{déc}$), l'étape /3/ comprenant les sous-étapes suivantes :

/3-1/ analyser spectralement le signal de détection hétérodyne ($S_{RF}$) démodulé à l'intérieur d'une fenêtre temporelle de découpage ($T_{déc}$), de façon à obtenir un résultat d'analyse spectrale pour ladite fenêtre temporelle ; et
/3-2/ répéter la sous-étape /3-1/ pour plusieurs fenêtres temporelles successives de découpage, et accumuler les résultats d'analyse spectrale respectivement obtenus pour lesdites fenêtres temporelles, la contribution au signal de détection hétérodyne ($S_{RF}$) provenant du volume-cible (V) étant prépondérante dans l'accumulation.

**10.** Procédé selon la revendication 9, utilisé pour mesurer une vitesse anémométrique.

**11.** Procédé selon la revendication 9 ou 10, suivant lequel la durée individuelle des créneaux temporels de modulation ($T_{mod}$) est comprise entre 0,2 $\mu$s et 10 $\mu$s.

**12.** Procédé selon l'une quelconque des revendications 9 à 11, mis en oeuvre à bord d'un aéronef.

**13.** Procédé selon l'une quelconque des revendications 1 à 8, suivant lequel la caractéristique de phase de l'onde optique qui est décalée est une phase initiale ($\varphi$) de ladite onde optique, de façon à réaliser une modulation de phase.

**14.** Procédé selon la revendication 13, suivant lequel l'incrément fixe ($\Delta\varphi_0$) de la phase initiale ($\varphi$) de l'onde optique est égal à $2\cdot\pi/n$.

**15.** Procédé selon la revendication 13 ou 14, suivant lequel une durée individuelle des créneaux temporels de modulation ($T_{mod}$) est inférieure ou égale à une durée individuelle des fenêtres temporelles de découpage ($T_{déc}$), l'étape /3/ comprenant les sous-étapes suivantes :

/3-1/ analyser spectralement le signal de détection hétérodyne ($S_{RF}$) démodulé à l'intérieur d'une fenêtre temporelle de découpage ($T_{déc}$), de façon à obtenir un résultat d'analyse spectrale pour ladite fenêtre temporelle ; et
/3-2/ répéter la sous-étape /3-1/ pour plusieurs fenêtres temporelles successives de découpage, et accumuler les résultats d'analyse spectrale respectivement obtenus pour lesdites fenêtres temporelles, la contribution au signal de détection hétérodyne ($S_{RF}$) provenant du volume-cible (V) étant prépondérante dans l'accumulation.

**16.** Procédé selon la revendication 15, suivant lequel la durée individuelle des créneaux temporels de modulation ($T_{mod}$) est un diviseur de la durée individuelle des fenêtres temporelles de découpage ($T_{déc}$).

**17.** Procédé selon la revendication 13 ou 14, suivant lequel une durée individuelle des créneaux temporels de modulation ($T_{mod}$) est supérieure ou égale à une durée individuelle des fenêtres temporelles de découpage ($T_{déc}$), l'étape /3/ comprenant les sous-étapes suivantes :

/3-1/ accumuler des segments du signal de détection hétérodyne ($S_{RF}$) démodulé correspondant à des fenêtres temporelles successives de découpage ($T_{déc}$), pendant les créneaux temporels successifs de modulation ($T_{mod}$) de sorte que la contribution au signal de détection hétérodyne ($S_{RF}$) provenant du volume-cible (V) soit accumulée de façon constructive ; et

/3-2/ analyser spectralement un résultat de l'accumulation.

18. Procédé selon la revendication 17, suivant lequel la durée individuelle des créneaux temporels de modulation ($T_{mod}$) est un multiple de la durée individuelle des fenêtres temporelles de découpage ($T_{déc}$).

19. Dispositif de type LIDAR (100) adapté pour effectuer des mesures vélocimétriques ou vibrométriques, et comprenant :

- un oscillateur laser (1), adapté pour produire une onde optique (OL) ;
- un séparateur optique (2), disposé pour diviser l'onde optique en un signal de source d'émission (SSE) et un signal de référence ($S_{Ref}$) ;
- un amplificateur optique (3), adapté pour produire un signal d'émission (SE) à partir du signal de source d'émission ;
- une tête optique (12), adaptée pour transmettre le signal d'émission en direction d'un volume-cible (V) et pour recevoir un signal rétrodiffusé (R) ;
- une unité de mélange-détection (11), adaptée pour transmettre le signal d'émission à la tête optique, et pour produire un signal de détection hétérodyne ($S_{RF}$) à partir du signal rétrodiffusé reçu par ladite tête optique et du signal de référence ;
- un modulateur de phase (4) disposé pour moduler au moins le signal de source d'émission ;
- des moyens de compensation d'un retard de propagation du signal d'émission (SE) et du signal rétrodiffusé (R) entre la tête optique (12) et le volume-cible (V) ; et
- des moyens d'analyse (20) du signal de détection hétérodyne, adaptés pour effectuer une analyse d'effet Doppler,

le dispositif étant caractérisé en ce les moyens d'analyse (20) du signal de détection hétérodyne sont adaptés en outre pour combiner une analyse spectrale dudit signal de détection hétérodyne avec une accumulation pour des fenêtres temporelles successives de découpage ($T_{déc}$),
et en ce qu'il comprend en outre :

- une unité de commande (40), reliée à une entrée de commande du modulateur de phase, et adaptée pour commander un fonctionnement dudit modulateur de phase pour mettre en oeuvre un procédé selon l'une quelconque des revendications précédentes.

20. Dispositif selon la revendication 19, dans lequel le modulateur de phase (4) comprend une cellule de Pockels, ou quatre cellules de Pockels agencées pour former un modulateur de type Dual Parallel Mach-Zehnder.

21. Dispositif selon la revendication 19 ou 20, dans lequel le modulateur de phase (4) est disposé pour recevoir en entrée le signal de source d'émission (SSE) produit par le séparateur optique (2), et pour transmettre en sortie ledit signal de source d'émission modulé à l'amplificateur optique (3), le dispositif comprenant en outre des moyens de démodulation (5) agencés pour démoduler le signal de détection hétérodyne ($S_{RF}$) conformément au fonctionnement du modulateur de phase (4), et les moyens de compensation de retard étant agencés pour compenser le retard de propagation du signal d'émission (SE) et du signal rétrodiffusé (R) lors de la démodulation.

22. Dispositif selon la revendication 19 ou 20, dans lequel le modulateur de phase (4) est disposé pour recevoir en entrée l'onde optique (OL) produite par l'oscillateur laser (1), et pour transmettre en sortie ladite onde optique modulée au séparateur optique (2), de sorte que le signal de source d'émission (SSE) et le signal de référence ($S_{Ref}$) sont modulés d'une façon identique, les moyens de compensation de retard (6) étant agencés pour retarder le signal de référence ($S_{Ref}$) transmis à l'unité de mélange-détection (11).

**Patentansprüche**

1. Verfahren zum Messen einer Geschwindigkeitsmess- oder Schwingungsmess-Charakteristik unter Verwendung einer Vorrichtung nach Art eines LIDARs mit heterodyner Detektion (100), wobei ein optisches Wellensendesignal (SE) in Richtung eines Zielvolumens (V) von einem optischen Kopf der Vorrichtung aus erzeugt wird und ein Rückstreusignal (R) von dem optischen Kopf abgefangen wird, und dann das Rückstreusignal durch heterodyne Detektion erkannt wird, um ein heterodynes Detektionssignal (SRF) zu erzeugen,
wobei das Verfahren die folgenden Schritte für einen Messzyklus umfasst:

1) Erzeugen einer Modulation einer Phasencharakteristik der optischen Welle in dem Sendesignal (SE);
2) Demodulieren des heterodynen Detektionssignals ($S_{RF}$) im Verhältnis zu der Modulation der Phasencharakteristik durch Kompensieren einer Ausbreitungsverzögerung des Sendesignals (SE) und des Rückstreusignals (R) zwischen dem optischen Kopf der Vorrichtung (100) und dem Zielvolumen (V);
3) Isolieren eines Beitrags zu dem heterodynen Detektionssignal, der von dem Zielvolumen (V) stammt; und
4) Erzielen eines Ergebnisses der Messung der Geschwindigkeitsmess- oder Schwingungsmess-Charakteristik aus einer Doppler-Effekt-Analyse des in Schritt 3) isolierten Beitrags,

wobei das Verfahren **dadurch gekennzeichnet ist, dass** der Beitrag zu dem heterodynen Detektionssignal, der von dem Zielvolumen stammt, in Schritt 3) isoliert wird, indem eine Spektralanalyse des demodulierten heterodynen Detektionssignals ($S_{RF}$) mit einer Summierung für aufeinanderfolgende Segmentierungszeitfenster ($T_{déc}$) kombiniert wird,
und dass:

- die Modulation erzielt wird, indem die Phasencharakteristik der optischen Welle während aufeinanderfolgender Modulationszeitschlitze ($T_{mod}$) gemäß einem festgelegten Inkrementierungsschritt, der mit Multiplikationsfaktoren q, die jeweils den Modulationszeitschlitzen zugeteilt sind, multipliziert wird, verschoben wird;
- die Multiplikationsfaktoren q gemäß einem der beiden folgenden Verfahren i) und ii) bestimmt werden, indem ein einziges der Verfahren für den ganzen Messzyklus verwendet wird:

   i) die Multiplikationsfaktoren q sind gleich $b + a^p[n]$, wobei für das Verfahren i):

      n eine Ganzzahl größer oder gleich vier ist, die während des Messzyklus konstant ist,
      a und b zwei andere Ganzzahlen sind, die während des Messzyklus ebenfalls konstant sind,
      p ein ganzzahliger Potenzfaktor ist, der positiv oder gleich null und grundsätzlich kleiner als $\Phi(n)$ ist, wobei $\Phi$ eine Indikatorfunktion nach Euler ist, und p variable Werte aufweist, die jeweils den Modulationszeitschlitzen zugeteilt sind,
      $b+a^p[n]$ die Reduktion von $b+a^p$ mod n ist, und
      a derart gewählt wird, dass a[n] ungleich null und ungleich eins ist;

   ii) die Multiplikationsfaktoren q gleich $d+c\cdot(p+1)\,p/2[n]$ sind, wobei für das Verfahren ii):

      n eine Ganzzahl größer oder gleich vier ist, die während des Messzyklus konstant ist,
      d und c zwei Ganzzahlen sind, die ebenfalls während des Messzyklus konstant sind,
      p ein ganzzahliger Variationsfaktor ist, der positiv oder gleich null und grundsätzlich kleiner als n ist, und zwar mit variablen Werten, die jeweils den Modulationszeitschlitzen zugeteilt sind,
      $d+c\cdot(p+1)\,p/2[n]$ die Reduktion von $d+c\cdot(p+1)\,p/2$ mod n ist, und
      c derart gewählt wird, dass c[n] ungleich null ist.

2. Verfahren nach Anspruch 1, wobei die Multiplikationsfaktoren q der aufeinanderfolgenden Modulationszeitschlitze ($T_{mod}$) eine Sequenz bilden, die während des Messzyklus regelmäßig wiederholt wird.

3. Verfahren nach Anspruch 1 oder 2, wobei die aufeinanderfolgenden Multiplikationsfaktoren q mindestens drei verschiedene Werte umfassen.

4. Verfahren nach Anspruch 3, wobei die aufeinanderfolgenden Multiplikationsfaktoren q mindestens hundert verschiedene Werte umfassen.

5. Verfahren nach einem der Ansprüche 1 bis 4, wobei die Zahl n eine Primzahl ist.

6. Verfahren nach einem der Ansprüche 1 bis 4, wobei die Zahl n das Zweifache einer Primzahl ist.

7. Verfahren nach einem der Ansprüche 5 oder 6, wobei die Multiplikationsfaktoren q gemäß dem Verfahren i) bestimmt werden, und wobei die Ganzzahl a eine primitive Wurzel einer multiplikativen Quotientengruppe (Z/nZ)* ist, wobei Z der Ring der relativen Ganzzahlen ist, * angibt, dass der Nullwert ausgeschlossen ist, wobei die Multiplikationsfaktoren q $\Phi(n)$ differenzierte Werte für p sind, das von 0 bis $\Phi(n)-1$ variiert.

8. Verfahren nach Anspruch 5, wobei die Multiplikationsfaktoren q gemäß dem Verfahren ii) bestimmt werden, und wobei die Ganzzahl c ein Generator einer additiven Quotientengruppe (Z/nZ) ist, wobei Z der Ring der relativen Ganzzahlen ist, wobei die Multiplikationsfaktoren q aus (n+1)/2 differenzierten Werten für p ausgewählt werden, das von 0 bis n-1 variiert.

9. Verfahren nach einem der Ansprüche 1 bis 8, wobei die Phasencharakteristik der optischen Welle, die verschoben wird, eine Frequenz (f) der optischen Welle ist, um eine Frequenzmodulation auszuführen, und wobei eine individuelle Dauer der Modulationszeitschlitze ($T_{mod}$) kleiner oder gleich einer individuellen Dauer der Segmentierungszeitfenster ($T_{déc}$) ist, wobei der Schritt 3) die folgenden Teilschritte umfasst:

> 3.1) spektrales Analysieren des demodulierten heterodynen Detektionssignals ($S_{RF}$) innerhalb eines Segmentierungszeitfensters ($T_{déc}$), um ein Ergebnis einer Spektralanalyse für das Zeitfenster zu erzielen; und
> 3.2) Wiederholen des Teilschritts 3.1) für mehrere aufeinanderfolgende Segmentierungszeitfenster und Summieren der Ergebnisse der Spektralanalyse, die jeweils für die Zeitfenster erzielt werden, wobei der Beitrag zum heterodynen Detektionssignal ($S_{RF}$), der von dem Zielvolumen (V) stammt, in der Summierung überwiegend ist.

10. Verfahren nach Anspruch 9, verwendet zum Messen einer Windgeschwindigkeit.

11. Verfahren nach Anspruch 9 oder 10, wobei die individuelle Dauer der Modulationszeitschlitze ($T_{mod}$) zwischen 0,2 $\mu$s und 10 $\mu$s liegt.

12. Verfahren nach einem der Ansprüche 9 bis 11, einsetzt an Bord eines Luftfahrzeugs.

13. Verfahren nach einem der Ansprüche 1 bis 8, wobei die Phasencharakteristik der optischen Welle, die verschoben wird, eine Anfangsphase ($\varphi$) der optischen Welle ist, um eine Phasenmodulation auszuführen.

14. Verfahren nach Anspruch 13, wobei das feste Inkrement ($\Delta\varphi_0$) der Anfangsphase ($\varphi$) der optischen Welle gleich $2\cdot\pi/n$ ist.

15. Verfahren nach Anspruch 13 oder 14, wobei eine individuelle Dauer der Modulationszeitschlitze ($T_{mod}$) kleiner oder gleich einer individuellen Dauer der Segmentierungszeitfenster ($T_{déc}$) ist, wobei der Schritt 3) die folgenden Teilschritte umfasst:

> 3.1) spektrales Analysieren des demodulierten heterodynen Detektionssignals ($S_{RF}$) innerhalb eines Segmentierungszeitfensters ($T_{déc}$), um ein Ergebnis einer Spektralanalyse für das Zeitfenster zu erzielen; und
> 3.2) Wiederholen des Teilschritts 3.1) für mehrere aufeinanderfolgende Segmentierungszeitfenster und Summieren der Ergebnisse der Spektralanalyse, die jeweils für die Zeitfenster erzielt werden, wobei der Beitrag zum heterodynen Detektionssignal ($S_{RF}$), der von dem Zielvolumen (V) stammt, in der Summierung überwiegend ist.

16. Verfahren nach Anspruch 15, wobei die individuelle Dauer der Modulationszeitschlitze ($T_{mod}$) ein Divisor der individuellen Dauer der Segmentierungszeitfenster ($T_{déc}$) ist.

17. Verfahren nach Anspruch 13 oder 14, wobei eine individuelle Dauer der Modulationszeitschlitze ($T_{mod}$) größer oder gleich einer individuellen Dauer der Segmentierungszeitfenster ($T_{déc}$) ist, wobei der Schritt 3) folgende Teilschritte umfasst:

> 3.1) Summieren der Segmente des demodulierten heterodynen Detektionssignals ($S_{RF}$), das aufeinanderfolgenden Segmentierungszeitfenstem ($T_{déc}$) entspricht, während der aufeinanderfolgenden Modulationszeitschlitze ($T_{mod}$), so dass der Beitrag zum heterodynen Detektionssignal ($S_{RF}$), der aus dem Zielvolumen (V) stammt, konstruktiv summiert wird; und
> 3.2) spektrales Analysieren eines Ergebnisses der Summierung.

18. Verfahren nach Anspruch 17, wobei die individuelle Dauer der Modulationszeitschlitze ($T_{mod}$) ein Vielfaches der individuellen Dauer der Segmentierungszeitfenster ($T_{déc}$) ist.

19. Vorrichtung nach Art eines LIDARs (100), geeignet zum Ausführen von Geschwindigkeits- oder Vibrationsmessungen und umfassend:

- einen Laseroszillator (1), der geeignet ist, um eine optische Welle (OL) zu erzeugen;
- einen optischen Separator (2), der angeordnet ist, um die optische Welle in ein Sendequellensignal (SSE) und ein Referenzsignal ($S_{Ref}$) zu unterteilen;
- einen optischen Verstärker (3), der geeignet ist, um ein Sendesignal (SE) aus dem Sendequellensignal zu erzeugen;
- einen optischen Kopf (12), der geeignet ist, um das Sendesignal in Richtung auf ein Zielvolumen (V) zu übertragen und um ein Rückstreusignal (R) zu empfangen;
- eine Mischdetektionseinheit (11), die geeignet ist, um das Sendesignal an den optischen Kopf zu übertragen, und um ein heterodynes Detektionssignal ($S_{RF}$) aus dem Rückstreusignal, das von dem optischen Kopf empfangen wird, und aus dem Referenzsignal zu erzeugen;
- einen Phasenmodulator (4), der angeordnet ist, um mindestens das Sendequellensignal zu modulieren;
- Mittel zum Kompensieren einer Ausbreitungsverzögerung des Sendesignals (SE) und des Rückstreusignals (R) zwischen dem optischen Kopf (12) und dem Zielvolumen (V); und
- Mittel (20) zum Analysieren des heterodynen Detektionssignals, die geeignet sind, um eine Doppler-Effekt-Analyse auszuführen,

wobei die Vorrichtung **dadurch gekennzeichnet ist, dass** die Mittel (20) zum Analysieren des heterodynen Detektionssignals ferner geeignet sind, um eine Spektralanalyse des heterodynen Detektionssignals mit einer Summierung für aufeinanderfolgende Segmentierungszeitfenster ($T_{déc}$) zu kombinieren, und dass sie ferner Folgendes umfasst:

- eine Steuereinheit (40), die mit einem Steuereingang des Phasenmodulators verbunden ist und geeignet ist, um den Betrieb des Phasenmodulators zu steuern, um ein Verfahren nach einem der vorhergehenden Ansprüche umzusetzen.

20. Vorrichtung nach Anspruch 19, wobei der Phasenmodulator (4) eine Pockels-Zelle oder vier Pockels-Zellen, die angeordnet sind, um einen Modulator vom Typ Dual Parallel Mach-Zehnder zu bilden, umfasst.

21. Vorrichtung nach Anspruch 19 oder 20, wobei der Phasenmodulator (4) angeordnet ist, um als Eingang das Sendequellensignal (SSE) zu empfangen, das von dem optischen Separator (2) erzeugt wird, und um als Ausgang das modulierte Sendequellensignal an den optischen Verstärker (3) zu senden, wobei die Vorrichtung ferner Demodulationsmittel (5) umfasst, die eingerichtet sind, um das heterodyne Detektionssignal ($S_{RF}$) gemäß der Funktionsweise des Phasenmodulators (4) zu demodulieren, und die Verzögerungskompensationsmittel eingerichtet sind, um die Ausbreitungsverzögerung des Sendesignals (SE) und des Rückstreusignals (R) bei der Demodulation zu kompensieren.

22. Vorrichtung nach Anspruch 19 oder 20, wobei der Phasenmodulator (4) angeordnet ist, um als Eingang die optische Welle (OL) zu empfangen, die von dem Laseroszillator (1) erzeugt wird, und um als Ausgang die modulierte optische Welle an den optischen Separator (2) zu senden, so dass das Sendequellensignal (SSE) und das Referenzsignal ($S_{Ref}$) gleich moduliert werden, wobei die Verzögerungskompensationsmittel (6) eingerichtet sind, um das Referenzsignal ($S_{Ref}$), das an die Mischdetektionseinheit (11) gesendet wird, zu verzögern.

**Claims**

1. Process for measuring a speed or vibration characteristic which uses a LIDAR device with heterodyne detection (100), wherein an optical wave emission signal (SE) is emitted from an optical head of said device in the direction of a target volume (V), and a backscattered signal (R) is collected by said optical head then is detected by heterodyne detection so as to produce a heterodyne detection signal ($S_{RF}$),

said process comprising the following steps for a measurement cycle:

/1/ producing a modulation of a phase characteristic of the optical wave in the emission signal (SE),
/2/ demodulating the heterodyne detection signal ($S_{RF}$) relative to the modulation of the phase characteristic, with compensating for a propagation delay of the emission signal (SE) and backscattered signal (R) between the optical head of the device (100) and the target volume (V),
/3/ isolating a contribution to the heterodyne detection signal originating from the target volume (V); and
/4/ obtaining a result for the speed or vibration characteristic measurement, from a Doppler analysis of the contribution isolated in step /3/,

the process being **characterized in that** the contribution to the heterodyne detection signal which originates from the target volume is isolated in step /3/ by combining a spectral analysis of the demodulated heterodyne detection signal ($S_{RF}$) with an accumulation over successive analysis time windows ($T_{wind}$), and **in that**:

- the modulation is obtained by shifting the phase characteristic of the optical wave during successive modulation time slots ($T_{mod}$), according to a fixed increment which is multiplied by factors q respectively assigned to said modulation time slots,
- the factors q are determined according to one of the two following methods /i/ or /ii/, with only one of said methods used during the entire measurement cycle:

/i/ the factors q are equal to $b + a^p[n]$, where for said method method /i/:

n is an integer greater than or equal to four, and is constant during the measurement cycle,
a and b are two other integers, which are also constant during the measurement cycle,
p is an exponent integer which is positive or zero and is strictly less than $\Phi(n)$, where $\Phi$ is a Euler's totient function, and p has varying values which are respectively assigned to the modulation time slots,
$b + a^p[n]$ indicates the $b + a^p$ modulo n reduction, and
a is selected such that a[n] is not zero or one,

/ii/ the factors q are equal to $d + c \cdot (p+1) \cdot p/2$ [n], where for said method /ii/:

n is an integer greater than or equal to four, and is constant during the measurement cycle,
d and c are two integers, which are also constant during the measurement cycle,
p is an integer factor of variation which is positive or zero, strictly less than n, and with varying values respectively assigned to the modulation time slots,
$d + c \cdot (p+1) \cdot p/2$ [n] designates the $d + c \cdot (p+1) \cdot p/2$ modulo n reduction, and
c is selected such that c[n] is not zero.

2. Process according to claim 1, wherein the factors q of the successive modulation time slots ($T_{mod}$) form a sequence which is periodically repeated during the measurement cycle.

3. Process according to either of claims 1 or 2, wherein the successive factors q comprise at least three different values.

4. Process according to claim 3, wherein the successive factors q comprise at least one hundred different values.

5. Process according to any one of claims 1 to 4, wherein the number n is prime.

6. Process according to any one of claims 1 to 4, wherein the number n is the double of a prime number.

7. Process according to claim 5 or 6, wherein the factors q are determined according to method /i/, and wherein the integer a is a primitive root of a quotient group $(Z/nZ)^*$ under multiplication, where Z is the ring of integers and * indicates that the zero value is excluded, the factors q being $\Phi(n)$ distinct values for p varying from 0 to $\Phi(n)-1$.

8. Process according to claim 5, wherein the factors q are determined according to method /ii/, and wherein the integer c is a generator of a quotient group $(Z/nZ)$ under addition, where Z is the ring of integers, the factors q being selected from among $(n+1)/2$ distinct values for p varying from 0 to n-1.

9. Process according to any one of claims 1 to 8, wherein the phase characteristic of the optical wave which is shifted is a frequency (f) of said optical wave, so as to perform a frequency modulation, and wherein an individual duration of the modulation time slots ($T_{mod}$) is less than or equal to an individual duration of the analysis time windows ($T_{wind}$), with step /3/ comprising the following sub-steps:

/3-1/ performing a spectral analysis of the demodulated heterodyne detection signal ($S_{RF}$) within an analysis time window ($T_{wind}$), in order to obtain a spectral analysis result for said time window, and
/3-2/ repeating sub-step /3-1/ for several successive analysis time windows, and accumulating the spectral analysis results respectively obtained for said time windows, with the contribution to the heterodyne detection signal ($S_{RF}$) originating from the target volume (V) being predominant in the accumulation.

10. Process according to claim 9, used to measure a wind speed.

11. Process according to either of claims 9 or 10, wherein the individual duration of the modulation time slots ($T_{mod}$) is between 0.2 $\mu$s and 10 $\mu$s.

12. Process according to any one of claims 9 to 11, implemented on board an aircraft.

13. Process according to any one of claims 1 to 8, wherein the phase characteristic of the optical wave which is shifted is an initial phase ($\varphi$) of said optical wave, so as to perform a phase modulation.

14. Process according to claim 13, wherein the fixed increment ($\Delta\varphi_0$) of the initial phase ($\varphi$) of the optical wave is equal to $2\cdot\pi/n$.

15. Process according to claim 13 or 14, wherein an individual duration of the modulation time slots ($T_{mod}$) is less than or equal to an individual duration of the analysis time windows ($T_{wind}$), with step /3/ comprising the following sub-steps:

/3-1/ performing a spectral analysis of the demodulated heterodyne detection signal ($S_{RF}$) within an analysis time window ($T_{wind}$), in order to obtain a spectral analysis result for said time window, and
/3-2/ repeating sub-step /3-1/ for several successive analysis time windows, and accumulating the spectral analysis results respectively obtained for said time windows, with the contribution to the heterodyne detection signal ($S_{RF}$) originating from the target volume (V) being predominant in the accumulation.

16. Process according to claim 15, wherein the individual duration of the modulation time slots ($T_{mod}$) is a divisor of the individual duration of the analysis time windows ($T_{wind}$).

17. Process according to either of claims 13 or 14, wherein an individual duration of the modulation time slots ($T_{mod}$) is greater than or equal to an individual duration of the analysis time windows ($T_{wind}$), with step /3/ comprising the following sub-steps:

/3-1/ accumulating segments of the demodulated heterodyne detection signal ($S_{RF}$) which correspond to successive analysis time windows ($T_{wind}$), during the successive modulation time slots ($T_{mod}$), so that the contribution to the heterodyne detection signal ($S_{RF}$) originating from the target volume (V) is accumulated in a constructive manner, and
/3-2/ performing a spectral analysis of a result of the accumulation.

18. Process according to claim 17, wherein the individual duration of the modulation time slots ($T_{mod}$) is a multiple of the individual duration of the analysis time windows ($T_{wind}$).

19. LIDAR device (100) adapted to perform speed or vibration measurements, and comprising:

- a laser oscillator (1), adapted to produce an optical wave (OL),
- an optical splitter (2), arranged to split the optical wave into an emission source signal (SSE) and a reference signal ($S_{Ref}$),
- an optical amplifier (3), adapted to produce an emission signal (SE) from the emission source signal,
- an optical head (12), adapted to transmit the emission signal in the direction of a target volume (V) and to receive a backscattered signal (R),
- a mixing and detection unit (11), adapted to transmit the emission signal to the optical head, and to produce a heterodyne detection signal ($S_{RF}$) from the backscattered signal received by said optical head and from the reference signal,
- a phase modulator (4) arranged to modulate at least the emission source signal,
- means for compensating for a propagation delay of the emission signal (SE) and backscattered signal (R) between the optical head (12) and the target volume (V), and
- analysis means (20) for analyzing the heterodyne detection signal, adapted to perform a Doppler analysis,

the device being **characterized in that** the analysis means (20) for the heterodyne detection signal are adapted to combine a spectral analysis of said heterodyne detection signal with an accumulation for successive analysis time windows ($T_{wind}$)
and **in that** it comprises additionally:

- a control unit (40), connected to a control input of the phase modulator and adapted to control an operation of said phase modulator to implement a process according to any one of the preceding claims.

20. Device according to claim 19, wherein the phase modulator (4) comprises a Pockels cell, or four Pockels cells arranged to form a Dual Parallel Mach-Zehnder modulator.

21. Device according to claim 19 or 20, wherein the phase modulator (4) is arranged to receive as input the emission source signal (SSE) produced by the optical splitter (2), and to output said emission source signal modulated to the optical amplifier (3), with the device additionally comprising demodulation means (5) arranged for demodulating the heterodyne detection signal ($S_{RF}$) in accordance with the operation of the phase modulator (4), the delay compensation means being arranged to compensate for the propagation delay of the emission signal (SE) and of the backscattered signal (R) during demodulation.

22. Device according to claim 19 or 20, wherein the phase modulator (4) is arranged to receive as input the optical wave (OL) produced by the laser oscillator (1), and to output said optical wave modulated to the optical splitter (2), so that the emission source signal (SSE) and the reference signal ($S_{Ref}$) are modulated in an identical manner, the delay compensation means (6) being arranged to delay the reference signal ($S_{Ref}$) sent to the mixing and detection unit (11).

FIG.1a.

FIG.1b.

EP 2 325 655 B1

FIG.2a.

SRef
RV
--- RP

FIG.2b.

RV
---- RP

FIG.3a.

$S_{ReF}$
RV
RP

Phase difference
in heterodyne
detection

FIG.3b.

RV
RP

**EP 2 325 655 B1**

## RÉFÉRENCES CITÉES DANS LA DESCRIPTION

**Documents brevets cités dans la description**

- WO 2005114253 A